(19) Europäisches Patentamt / European Patent Office / Office européen des brevets

(11) **EP 4 376 120 A1**

(12) **EUROPEAN PATENT APPLICATION**

(43) Date of publication:
**29.05.2024 Bulletin 2024/22**

(21) Application number: **23209710.5**

(22) Date of filing: **14.11.2023**

(51) International Patent Classification (IPC):
**H01M 4/134** (2010.01)    **H01M 4/1395** (2010.01)
**H01M 4/36** (2006.01)    **H01M 4/38** (2006.01)
**H01M 4/02** (2006.01)

(52) Cooperative Patent Classification (CPC):
**H01M 4/134; H01M 4/1395; H01M 4/362;**
**H01M 4/364; H01M 4/381;** H01M 2004/021;
H01M 2004/027

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **22.11.2022 KR 20220157576**

(71) Applicants:
• **SK On Co., Ltd.**
**Seoul 03161 (KR)**
• **SK Innovation Co., Ltd.**
**Seoul 03188 (KR)**

(72) Inventors:
• **YANG, Young Mo**
**34124 Daejeon (KR)**
• **LA, Yun Ji**
**34124 Daejeon (KR)**
• **LEE, Kwang Ho**
**34124 Daejeon (KR)**
• **CHUNG, Ju Ho**
**34124 Daejeon (KR)**

(74) Representative: **Prüfer & Partner mbB**
**Patentanwälte · Rechtsanwälte**
**Sohnckestraße 12**
**81479 München (DE)**

(54) **ANODE ACTIVE MATERIAL FOR LITHIUM SECONDARY BATTERY AND LITHIUM SECONDARY BATTERY INCLUDING THE SAME**

(57) An anode active material for a secondary battery according to an embodiment includes a plurality of a silicon-based active material particle being doped with a metal element and including pores. An average of porosity values measured for each of 10 different silicon-based active material particles among the plurality of the silicon-based active material particle is in a range from 0.2% to 9.0%.

## FIG. 1

EP 4 376 120 A1

**Description**

BACKGROUND

1. Field

The disclosure of this patent application relates to an anode active material for a lithium secondary battery and a lithium secondary battery including the same.

2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery has been developed and applied as a power source for an eco-friendly vehicle such as a hybrid vehicle, an electric vehicle, etc.

Examples of the secondary battery includes, e.g., a lithium secondary battery, a nickel-cadmium battery, a nickel-hydrogen battery, etc. The lithium secondary battery has been actively developed and applied due to high operational voltage and energy density per unit weight, a high charging rate, a compact dimension, etc.

For example, the lithium secondary battery may include an electrode assembly including a cathode, an anode and a separation layer (separator), and an electrolyte immersing the electrode assembly. The lithium secondary battery may further include an outer case having, e.g., a pouch shape for accommodating the electrode assembly and the electrolyte.

Recently, as an application range of the lithium secondary battery is expanded, the lithium secondary battery having higher capacity and power has been researched. For example, silicon having high capacity may be used together with carbon as an anode active material.

However, a difference of volume expansion ratios between silicon and carbon may cause cracks in the anode and an exposure to the electrolyte during repeated charging/discharging.

Accordingly, an anode active material capable of maintaining capacity propertied and initial efficiency while suppressing the cracks in the anode is required.

SUMMARY

According to an aspect of the present disclosure, there is provided an anode active material for a lithium secondary battery having improved power and life-span properties.

According to an aspect of the present invention, there is provided a lithium secondary battery having improved power and life-span properties.

An anode active material for a lithium secondary battery includes a plurality of a silicon-based active material particle being doped with a metal element and including pores. An average of porosity values defined by Equation 1 and measured for each of 10 different silicon-based active material particles among the plurality of the silicon-based active material particle is in a range from 0.2% to 9.0%.

$$[\text{Equation 1}]$$

$$\text{Porosity (\%)} = (Ap/As)*100$$

In Equation 1, Ap is a sum of cross-sectional areas of the pores included in a 10 K resolution scanning electron microscope (SEM) image from a cross-section of the silicon-based active material particle, and As is a cross-sectional area of the silicon-based active material particle included in the 10 K resolution SEM image from the cross-section of the silicon-based active material particle.

In some embodiments, the metal element may include at least one selected from the group consisting of Mg, Li, Al, Ca, Fe, Ti and V.

In some embodiments, the metal element may include Mg.

In some embodiments, the average of the porosity values may be in a range from 1.3% to 7.5%.

In some embodiments, the silicon-based active material particle may include at least one selected from the group consisting of Si, $SiOx$ ($0<x\leq2$) and a Si-C composite.

In some embodiments, a Si/Me ratio defined by Equation 2 of the silicon-based active material particle may be in a range from 3 to 8:

[Equation 2]

$$\text{Si/Me ratio} = (C_{Si}/C_{Me})$$

In Equation 2, $C_{Si}$ is a content (wt%) of a silicon element contained in the silicon-based active material particle based on a total weight of the silicon-based active material particle, and $C_{Me}$ is a content (wt%) of the metal element based on the total weight of the silicon-based active material particle.

In some embodiments, $C_{Me}$ in Equation 2 may be in a range from 7 wt% to 14 wt%.

In some embodiments, the Si/Me ratio may be in a range from 4 to 7.

In some embodiments, the anode active material may further include carbon-based active material particles.

In some embodiments, the carbon-based active material particles may include at least one selected from the group consisting of artificial graphite and natural graphite.

In some embodiments, a content of the plurality of the silicon-based active material particle based on a sum of a weight of the plurality of the silicon-based active material particle and a weight of the carbon-based active material particles may be in a range from 0.1 wt% to 35 wt%.

In some embodiments, each of the plurality of the silicon-based active material particle may further include a carbon coating layer formed on at least a portion of a surface of the silicon-based active material particle.

A lithium secondary battery may include an anode including the anode active material for a lithium secondary battery according to the above-described embodiments, and a cathode facing the anode.

An anode active material for a lithium secondary battery includes a plurality of silicon-based active material particles being doped with a metal element and having pores.

An average of porosity values measured from each of 10 different silicon-based active material particles among the plurality of silicon-based active material particles is in a range from 0.2% to 9.0%. Within the above range, life-span properties and an initial discharge capacity may be improved while improving initial efficiency of the lithium secondary battery.

In some embodiments, a ratio of a content of a silicon element based on a total weight of the silicon-based active material particles relative to a content of the metal element based on a total weight of the silicon-based active material particles may be in a range from 3 to 8. Within the above range, the content of the metal element in the silicon-based active material particles may be adjusted to an appropriate range. Accordingly, both the initial efficiency and the life-span properties of the silicon-based active material particles may be improved.

BRIEF DESCRIPTION OF THE DRAWINGS

FIGS. 1 and 2 are a schematic plan view and a schematic cross-sectional view illustrating a secondary battery in accordance with example embodiments.

FIGS. 3 to 6 are 10 K resolution scanning electron microscope (SEM) cross-sectional images of silicon-based active material particles prepared according to Examples 1 to 4, respectively.

DETAILED DESCRIPTION OF THE EMBODIMENTS

According to embodiments of the present disclosure, an anode active material for a lithium secondary battery including silicon-based active material particles is provided. Further, a lithium secondary battery including the anode active material is provided.

Hereinafter, detailed descriptions of the present disclosure will be described in detail with reference to exemplary embodiments. However, those skilled in the art will appreciate that such embodiments are provided to further understand the spirit of the present inventive concepts and do not limit subject matters to be protected as disclosed in the detailed description and appended claims.

An anode active material for a lithium secondary battery (hereinafter, that may be abbreviated as an anode active material) includes a plurality of silicon-based active material particles including pores.

For example, the silicon-based active material particles may provide high capacity properties to the anode active material. Accordingly, the capacity properties of the anode active material may be improved.

For example, the silicon-based active material particle may include at least one selected from the group consisting of Si, SiOx (0<x≤2), and a Si-C composite. For example, the Si-C composite may include a metallurgical grade silicon.

In some embodiments, the silicon-based active material particle may be SiOx (0<x≤2). In some embodiments, the silicon-based active material particle may include SiOx (0<x<2). In this case, a volume expansion ratio may be reduced compared to that of Si, so that life-span properties may be improved.

An average of porosity values defined by Equation 1 below and measured for each of 10 different silicon-based active material particles among the plurality of silicon-based active material particles ranges from 0.2% to 9.0%, and in some embodiments, from 1.3% to 7.5%.

[Equation 1]

$$\text{Porosity (\%)} = (Ap/As)*100$$

In Equation 1, Ap is a sum of cross-sectional areas of the pores included in a 10 K resolution scanning electron microscope (SEM) image from a cross-section of the silicon-based active material particle, and As is a cross-sectional area of the silicon-based active material particle included in the 10 K resolution SEM image from the cross-section of the silicon-based active material particle.

For example, the porosity may be an area of pores based on a total area of the silicon-based active material particle including the area of the pores in a 10 K resolution SEM image from the cross-section of the same silicon-based active material particle.

For example, Ap is obtained by taking a cross-section of the silicon-based active material particle with SEM to obtain a 10 K resolution image, and then measuring the sum of the cross-sectional areas of pores existing in a virtual square region in which a length of one side of the image is 5 $\mu$m.

For example, As is obtained by taking a cross-section of the silicon-based active material particle with SEM to obtain a 10 K resolution image, and then measuring the cross-sectional area of the silicon-based active material particle including cross-sectional areas of the pores existing in a virtual square region in which a length of one side of the image is 5 $\mu$m.

Within the range of the average of the porosity values, the life-span properties and initial discharge capacity may be improved while the initial efficiency of the lithium secondary battery is improved.

If the average of the porosity values is less than 0.2%, a sufficient amount of pores may not be formed in the silicon-based active material particle to degrade the initial efficiency of the lithium secondary battery.

If the average of the porosity values exceeds 9.0%, pores may be excessively formed in the silicon-based active material particle to cause cracks of the silicon-based active material particle. Accordingly, a side reaction between the anode active material and the electrolyte may be increased and a capacity retention of the lithium secondary battery may decrease.

Each silicon-based active material particle is doped with a metal element. Accordingly, a resistance of the anode active material may be reduced and the initial efficiency of the lithium secondary battery may be improved.

In some embodiments, the metal element may include at least one selected from the group consisting of Mg, Li, Al, Ca, Fe, Ti and V.

In one embodiment, the metal element may include Mg. For example, the porosity may be increased by including Mg as a doping element in the silicon-based active material particles. Accordingly, the initial efficiency of the lithium secondary battery may be improved.

In some embodiments, a Si/Me ratio defined by Equation 2 below of the silicon-based active material particle may be in a range from 3 to 8, and in some embodiments, from 4 to 7.

[Equation 2]

$$\text{Si/Me ratio} = (C_{Si}/C_{Me})$$

In Equation 2, $C_{Si}$ is a content (weight percent, wt%) of a silicon element contained in the silicon-based active material particles based on a total weight of the silicon-based active material particles, and $C_{Me}$ is a content (wt%) of the metal element based on the total weight of the silicon-based active material particles.

For example, $C_{Si}$ and $C_{Me}$ of Equation 2 may be measured through an inductively coupled plasma (ICP) analysis. For example, an ICP assay can be performed using an ICP-OES Optima 8300 instrument. Within the Si/Me ratio range, the metal element content in the silicon-based active material particle may be adjusted to an appropriate range. Accordingly, both the initial efficiency and the life-span properties of the silicon-based active material particles may be improved.

In one embodiment, $C_{Me}$ may be a content ($C_{Mg}$) of a magnesium element based on the total weight of the silicon-based active material particles.

In some embodiments, the content ($C_{Me}$) of the metal element based on the total weight of the silicon-based active material particles may be in a range from 7 wt% to 14 wt%. Within this range, the initial efficiency may be sufficiently improved while preventing deterioration of the capacity life-span properties due to an excessive doping.

In some embodiments, the silicon-based active material particle may further include a carbon coating layer formed on at least a portion of a surface of the silicon-based active material particle. Accordingly, a contact of the silicon-based active material particles with moisture in an air and/or water in the anode slurry may be prevented. Accordingly, the discharge capacity and the capacity retention of the lithium secondary battery may be enhanced.

For example, the carbon coating layer may include at least one selected from the group consisting of an amorphous carbon, a carbon nanotube, a carbon nanofiber, graphite, graphene, graphene oxide, reduced graphene oxide and a conductive polymer. For example, the conductive polymer may include polyacetylene, polyaniline, polypyrrole, and/or polythiophene. These may be used alone or in a combination thereof.

In some embodiments, the anode active material may further include carbon-based active material particles. For example, the anode active material may include both the above-described silicon-based active material particles and the carbon-based active material particles. Accordingly, volume expansion of the anode active material due to repeated charging and discharging may be suppressed and the life-span properties may be improved.

For example, the carbon-based active material particle may include at least one selected from the group consisting of artificial graphite and natural graphite.

In some embodiments, a content of the silicon-based active material particles may be in a range from 0.1 wt% to 35 wt% based on the total weight of the anode active material. For example, the content of the silicon-based active material particles may be in a range from 0.1 wt% to 35 wt% based on a sum of weights of the silicon-based active material particles and the carbon-based active material particles. Within this range, the life-span properties may be improved while enhancing the capacity properties of the anode active material.

In some embodiments, a content of the carbon-based active material particles may be in a range from 30 wt% to 80 wt% based on the total weight of the anode active material. Within the above range, the life-span properties may be improved while suppressing a capacity degradation of the anode active material.

In example embodiments, the silicon-based active material particles may be prepared by mixing and firing a silicon source.

For example, the silicon source may include at least one selected from the group consisting of silicon and silicon dioxide ($SiO_2$). In one embodiment, the silicon source may include a mixture of silicon and silicon dioxide.

For example, the mixed silicon source may be introduced into a reactor, and calcined at a temperature ranging from 400 °C to 800 °C under a vacuum atmosphere. The calcined mixture of the silicon source may be cooled, pulverized and classified to form silicon-based active material particles.

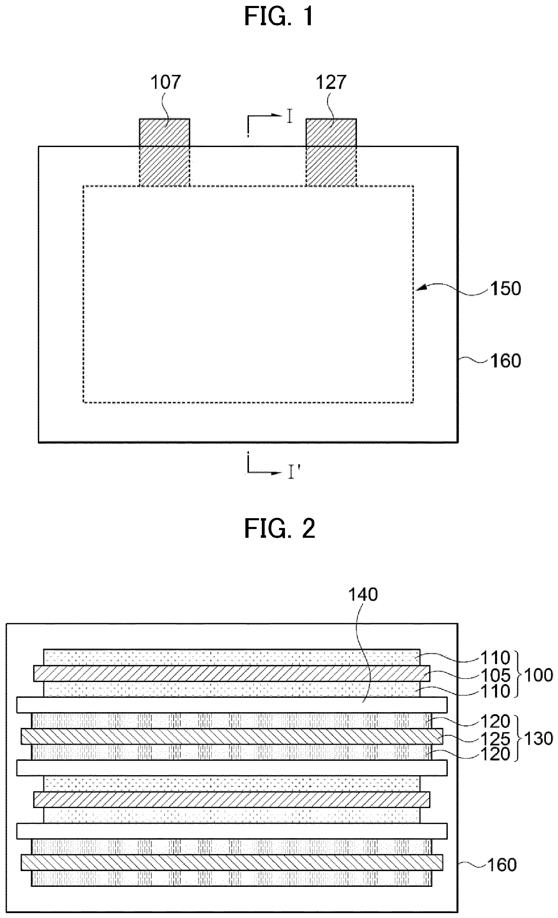

FIGS. 1 and 2 are a schematic plan view and a cross-sectional view, respectively, illustrating a lithium secondary battery according to example embodiments. For example, FIG. 2 is a cross-sectional view taken along a line I-I' of FIG. 1 in a thickness direction of the lithium secondary battery.

Referring to FIGS. 1 and 2, the lithium secondary battery may include a cathode 100, and an anode 130 facing the cathode and including the anode active material that includes the above-described silicon-based active material particles.

The cathode 100 may include a cathode active material layer 110 formed by coating a cathode slurry that contains a cathode active material on at least one surface of a cathode current collector 105.

The cathode active material may include a compound capable of reversibly intercalating and de-intercalating lithium ions.

The cathode active material for a secondary battery according to example embodiments may include a lithium-nickel metal oxide.

For example, the lithium-nickel metal oxide may further include at least one of cobalt (Co) and manganese (Mn). In one embodiment, the cathode active material may include a Ni-Co-Mn (NCM)-based lithium oxide.

In some embodiments, the cathode active material or the lithium-nickel metal oxide may include a layered structure or a crystal structure represented by Chemical Formula 1 below.

$$[\text{Chemical Formula 1}] \qquad Li_xNi_aM_bO_{2+z}$$

In Chemical Formula 1, $0.9 \leq x \leq 1.2$, $0.6 \leq a \leq 0.99$, $0.01 \leq b \leq 0.4$, and $-0.5 \leq z \leq 0.1$. As mentioned above, M may include Co and/or Mn.

In some embodiments, a molar ratio or a concentration of Ni represented as "a" in Chemical Formula 1 may be greater than or equal to 0.8, and may exceed 0.8 in some embodiments.

The chemical structure represented by Chemical Formula 1 indicates a bonding relationship included in the layered structure or the crystal structure of the cathode active material, and does not exclude another additional element. For example, M includes Co and/or Mn, and Co and Mn may serve as main active elements of the cathode active material together with Ni. Chemical Formula 1 is provided to express the bonding relationship of the main active elements, and is to be understood as a formula encompassing introduction and substitution of the additional element.

In one embodiment, an auxiliary element for enhancing chemical stability of the cathode active material or the layered structure/crystal structure may be further included in addition to the main active elements. The auxiliary element may be incorporated into the layered structure/crystal structure to form a bond, and this case is to be understood within a range expressed by Chemical Formula 1.

The auxiliary element may include, e.g., at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may act as an auxiliary active element such as Al that contributes to the capacity/power activity of the cathode active material together with Co or Mn.

For example, the cathode active material or the lithium-nickel metal oxide may have a layered structure or a crystal structure represented by Chemical Formula 1-1 below.

$$[\text{Formula 1-1}] \quad \quad Li_xNi_aM1_{b1}M2_{b2}O_{2+z}$$

In Chemical Formula 1-1, M1 may include Co and/or Mn. M2 may include the above-described auxiliary element. In Chemical Formula 1-1, $0.9 \leq x \leq 1.2$, $0.6 \leq a \leq 0.99$, $0.01 \leq b1+b2 \leq 0.4$, and $-0.5 \leq z \leq 0.1$.

The cathode active material may further include a coating element or a doping element. For example, elements substantially the same as or similar to the above-mentioned auxiliary element may be used as the coating element or the doping element. For example, one of the above elements or a combination of two or more from the above elements may be used as the coating element or the doping element.

The coating element or the doping element may be present on a surface of the lithium-nickel metal oxide particle or may penetrate through the surface of the lithium-nickel metal oxide particle to be included in the bonding structure represented by Chemical Formula 1 or Chemical Formula 1-1.

For example, a cathode slurry may be prepared by mixing and stirring the cathode active material in a solvent with a binder, a conductive material and/or a dispersive agent. The slurry may be coated on the cathode current collector 105, and then dried and pressed to form the cathode 100.

The cathode current collector 105 may include aluminum, stainless steel, nickel, titanium, or an alloy thereof, or may include aluminum or stainless steel surface-treated with carbon, nickel, titanium, silver, etc.

The solvent may include a non-aqueous solvent. For example, N-methyl-2-pyrrolidone (NMP), dimethylformamide, dimethylacetamide, N,N-dimethylaminopropylamine, ethylene oxide, tetrahydrofuran, etc., may be used.

For example, the binder may include an organic based binder such as a polyvinylidene fluoride-hexafluoropropylene copolymer (PVDF-co-HFP), polyvinylidenefluoride (PVDF), polyacrylonitrile, polymethylmethacrylate, etc., or an aqueous based binder such as styrene-butadiene rubber (SBR) that may be used with a thickener such as carboxymethyl cellulose (CMC).

For example, a PVDF-based binder may be used as a cathode binder. In this case, an amount of the binder for forming the cathode active material layer 110 may be reduced, and an amount of the cathode active material may be relatively increased. Thus, capacity and power of the lithium secondary battery may be further improved.

The conductive material may be included to promote an electron movement between active material particles. For example, the conductive material may include a carbon-based conductive material such as graphite, carbon black, graphene, carbon nanotube, etc., and/or a metal-based conductive material such as tin, tin oxide, titanium oxide, a perovskite material such as $LaSrCoO_3$, $LaSr_4MnO_3$, etc.

In example embodiments, an anode slurry may be prepared from the above-described anode active material. For example, the anode slurry may be prepared by mixing and stirring the anode active material with an anode binder, a conductive material and a thickener in a solvent.

For example, the solvent included in the anode slurry may be an aqueous solvent such as water, an aqueous hydrochloric acid solution, an aqueous sodium hydroxide solution, etc.

For example, the anode binder may include a polymer material such as styrene-butadiene rubber (SBR). Examples of the thickener include carboxymethyl cellulose (CMC).

For example, the conductive material may include a material of the same type as that of the above-described conductive material included in the cathode active material layer.

In some embodiments, the anode 130 may include an anode active material layer 120 formed by applying (coating) the above-described anode slurry on at least one surface of an anode current collector 125 and then drying and pressing the anode slurry.

For example, the anode current collector 125 may include a metal that has high conductivity, and may be easily adhered to the anode slurry and non-reactive within a voltage range of the battery. For example, stainless steel, nickel, copper, titanium, an alloy thereof, or copper or stainless steel surface-treated with carbon, nickel, titanium or silver may be used.

A separation layer 140 may be interposed between the cathode 100 and the anode 130. The separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, etc. The separation layer 140 may also be formed from a non-woven fabric including a glass fiber with a high melting point, a polyethylene terephthalate fiber, or the like.

In some embodiments, an area and/or a volume of the anode 130 (e.g., a contact area with the separation layer 140) may be greater than that of the cathode 100. Thus, lithium ions generated from the cathode 100 may be easily transferred to the anode 130 without loss by, e.g., precipitation or sedimentation. Thus, improvements of capacity and power of the lithium secondary battery from using the above-described anode active material may be effectively implemented.

In example embodiments, an electrode cell may be defined by the cathode 100, the anode 130 and the separation layer 140, and a plurality of the electrode cells may be stacked to form the electrode assembly 150 having, e.g., a jelly roll shape. For example, the electrode assembly 150 may be formed by winding, stacking or folding of the separation layer 140.

The electrode assembly 150 may be accommodated together with an electrolyte in a case 160 to define the lithium secondary battery. In example embodiments, a non-aqueous electrolyte may be used as the electrolyte.

For example, the non-aqueous electrolyte may include a lithium salt and an organic solvent. The lithium salt and may be represented by $Li^+X^-$. An anion of the lithium salt $X^-$ may include, e.g., $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination thereof.

As illustrated in FIG. 1, electrode tabs (a cathode tab and an anode tab) may protrude from the cathode current collector 105 and the anode electrode current collector 125 included in each electrode cell to one side of the case 160. The electrode tabs may be welded together with the one side of the case 160 to form an electrode lead (a cathode lead 107 and an anode lead 127) extending or exposed to an outside of the case 160.

The lithium secondary battery may be manufactured in, e.g., a cylindrical shape using a can, a square shape, a pouch shape or a coin shape.

Hereinafter, embodiments are proposed to more concretely describe the present disclosure.

Examples 1 to 7 and Comparative Examples 1 to 4

(1) Preparation of anode active material

A mixture of silicon (Si), silicon dioxide ($SiO_2$) and magnesium (Mg) was put into a reaction furnace and fired at a temperature of 600 °C for 5 hours under a vacuum atmosphere of 10 Pa.

The calcined mixture was cooled, and a precipitate was collected, pulverized with a ball mill and classified to obtain a plurality of Mg-doped SiO particles.

Pulverization with ball mill was performed under conditions below.

[Pulverization conditions]

    i) Ball mill progress time: 12 hr
    ii) Ball mill rate: 1000 rpm
    iii) Ball type: alumina ($Al_2O_3$) and zirconium ($ZrO_2$)
    iv) Ball size: 5 mm and 10 mm (mixing ratio of 5:5)

A target average particle diameter (D50) of Mg-doped SiO particle was about 8 μm.

The D50 was measured by Particle size analyzer (BLUEWAVE wet of Microtrac), and a solvent was ethanol. D50 of Mg-doped SiO particle was measured three times and an average of measured values was used as the D50.

In the raw materials, input amounts of silicon, silicon dioxide and magnesium were adjusted so that a content of silicon element ($C_{Si}$) based on a total weight of silicon-based active material particles and a content of magnesium element ($C_{Me}$) based on the total weight of the silicon-based active material particles became as shown in Table 1.

A plurality of the SiO particles doped with Mg were used as a plurality of the silicon-based active material particles.

The silicon-based active material particles and artificial graphite were mixed in a weight ratio of 2:8 to prepare an anode active material.

## (2) Fabrication of anode

The above-prepared anode active material was left for one day. 90 wt% of the anode active material, 1 wt% of carbon nanotube (CNT) as a conductive material, 5 wt% of styrene-butadiene rubber (SBR) as a binder and 4 wt% of carboxymethyl cellulose (CMC) as a thickener were mixed to prepare an anode slurry.
The anode slurry was coated on a copper substrate having a thickness of 12 $\mu$m, dried and pressed to fabricate an anode.

## (3) Fabrication of lithium secondary battery

A slurry was prepared by mixing $LiNi_{0.8}Co_{0.1}Mn_{0.1}O_2$ as a cathode active material, carbon black as a conductive material and polyvinylidene fluoride (PVdF) as a binder in a weight ratio of 96.5:2:1.5, respectively. The slurry was uniformly coated on an aluminum foil having a thickness of 12 $\mu$m and vacuum dried to prepare a cathode for a secondary battery.
The cathode and the anode were notched in a predetermined size and stacked with a separator (polyethylene, thickness: 13 $\mu$m) interposed therebetween to form an electrode cell. Tab portions of the cathode and the anode were each welded. The welded cathode/separator/anode assembly was placed in a pouch and sealed at three sides except for an electrolyte injection side. The tab portions were included in the sealing portion.
An electrolyte was injected through the electrolyte injection side, the electrolyte injection side was also sealed, and then impregnated for 12 hours or more.
After preparing a 1M $LiPF_6$ solution using a mixed solvent of EC/EMC/DEC (25/45/30; volume ratio), 1 wt% of vinylene carbonate (VC), 0.5 wt% of 1,3-propensultone (PRS) and 0.5 wt% of lithium bis(oxalato) borate (LiBOB) were added to prepare the electrolyte.
Thereafter, pre-charging was performed for 36 minutes with a current corresponding to 0.25 C. After 1 hour, degassing, aging for more than 24 hours, and formation charging and discharging was performed (charging condition: CC-CV 0.2C 4.2V 0.05C CUT-OFF, discharging condition: CC 0.2C 2.5V CUTOFF).

## Example 8

An anode active material, an anode and a lithium secondary battery were prepared by the same methods as those in Example 3, except that the silicon-based active material particles and artificial graphite were mixed in a weight ratio of 0.05:99.95.

## Example 9

An anode active material, an anode and a lithium secondary battery were prepared by the same methods as those in Example 3, except that the silicon-based active material particles and artificial graphite were mixed in a weight ratio of of 4:6.

## Example 10

A plurality of SiO particles doped with Mg were prepared by the same method as that in Example 3.
The plurality of Mg-doped SiO particles were placed in a CVD coater, and a mixed gas of methane gas and argon gas was injected at a flow rate ranging from 50 mL/min to 100 mL/min. A plurality of silicon-based active material particles having a carbon coating layer were prepared by heating the CVE coater to 900 °C at a heating rate of 5 °C/min to 20 °C/min, and then maintaining the CVD coater at 900 °C for about 60 minutes to 360 minutes.
The plurality of silicon-based active material particles and artificial graphite were mixed in a weight ratio of 2:8 to form an anode active material.
An anode and a lithium secondary battery were prepared by the same methods as those in Example 3, except that the above-obtained anode active material prepared was used.

## Experimental Example

## (1) Measurement of average of porosity values

Cross-sections of 10 different silicon-based active material particles among anode active materials prepared according to Examples and Comparative Examples were photographed using a scanning electron microscope (SEM) to obtain 10 K resolution images.

A sum (Ap) of cross-sectional areas of pores present in an imaginary square region having a side length of 5 $\mu$m in each of the images was measured.

A cross-sectional area (As) of the silicon-based active material particle present in an imaginary square region having a side length of 5 $\mu$m in each of the images was measured.

The measured Ap and As were introduced into Equation 1 to calculate porosities of each silicon-based active material particle.

The calculated porosity was averaged to obtain an average of the porosity values.

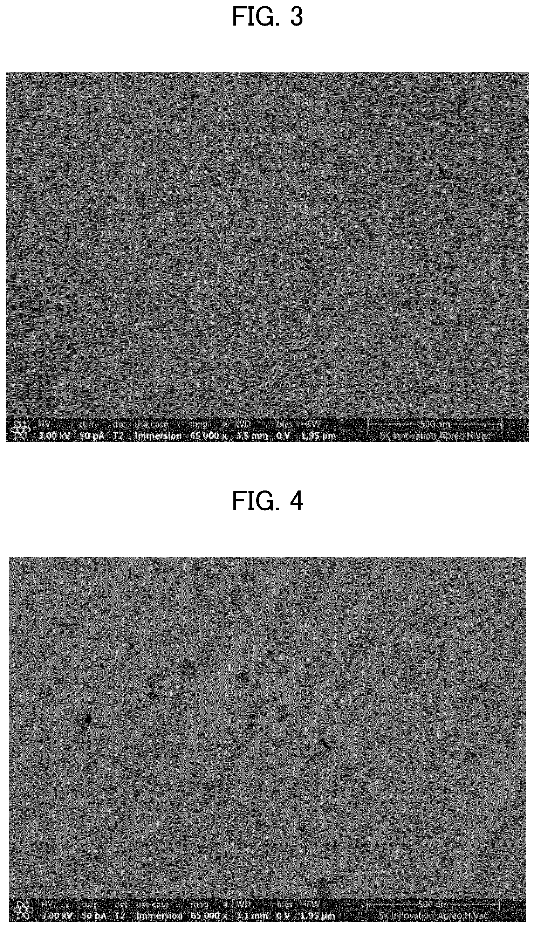

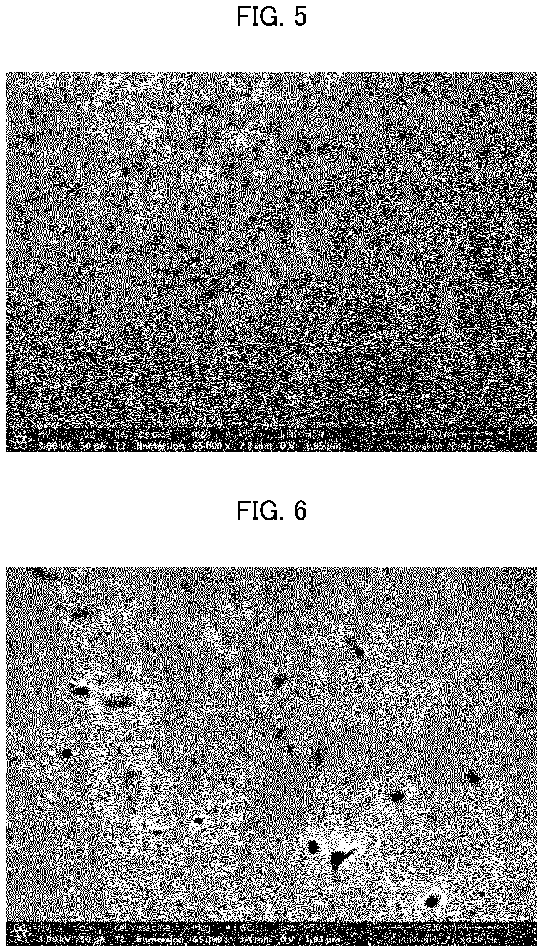

FIGS. 3 to 6 are 10 K resolution scanning electron microscope (SEM) cross-sectional images of silicon-based active material particles prepared according to Examples 1 to 4, respectively.

Referring to FIGS. 3 to 6, a degree to which pores are included in the silicon-based active material particles can be adjusted and measured.

Specifically, 10 different portions of the anode prepared according to each of Examples and Comparative Examples were subjected to the SEM measurement after a cross-section pretreatment.

The cross-section pretreatment was performed using Hitachi's IM4000 ion miller IM-02 device under the following conditions.

i) Acceleration voltage: 6 kV
ii) Discharge current: 110 $\mu$A
iii) Time: 3 h

The SEM measurement was performed using Hitachi's SU8230 SEM-03 device under the following conditions.

i) Mode: SE
ii) Detector: SE
iii) Acceleration voltage: 5 kV
iv) current: 10 $\mu$A

(2) Measurement of Si/Me ratio

An ICP analysis was performed using an ICP-OES Optima 8300 device for the anode active materials prepared according to Examples and Comparative Examples. From the ICP analysis, a content of silicon elements ($C_{Si}$) (wt%) in the silicon-based active material particles based on a total weight of the silicon-based active material particles, and a content of metal elements ($C_{Me}$) (wt%) based on a total weight of the silicon-based active material particles were measured.

Specifically, the anode active material samples of Examples and Comparative Examples were put into a polypropylene tube (PP tube) of an ICP-OES Optima 8300 device, and an excess amount of nitric acid and a small amount of hydrofluoric acid were added and sealed.

The sealed PP tube was sufficiently shaken and allowed to stand overnight at room temperature to dissolve the sample. Thereafter, a saturated boric acid water was added to the PP tube to neutralize hydrofluoric acid, and ultrapure water was added to dilute the sample solution in the PP tube.

The ICP analysis was performed on the diluted solution to measure $C_{Si}$ and $C_{Me}$. After measurement, the sample was removed using a 0.45 $\mu$m syringe filter.

The measured CSi and CMe were introduced into Equation 2 to calculate the Si/Me ratio.

The results are shown in Table 1 below.

[Table 1]

| No. | average of porosity values (%) | $C_{Si}$ (wt%) | $C_{Me}$ (wt%) | Si/Meratio ($C_{Si}/C_{Me}$) | content of silicon-based active material particles (wt%) |
|---|---|---|---|---|---|
| Example 1 | 0.28 | 50.3 | 7.0 | 7.19 | 20 |
| Example 2 | 1.37 | 48.8 | 10.1 | 4.83 | 20 |
| Example 3 | 3.42 | 48.1 | 12.4 | 3.88 | 20 |
| Example 4 | 5.50 | 47.2 | 14.4 | 3.28 | 20 |
| Example 5 | 7.80 | 48.2 | 20.5 | 2.35 | 20 |

(continued)

| No. | average of porosity values (%) | $C_{Si}$ (wt%) | $C_{Me}$ (wt%) | Si/Me ratio ($C_{Si}/C_{Me}$) | content of silicon-based active material particles (wt%) |
|---|---|---|---|---|---|
| Example 6 | 6.96 | 48.5 | 16.6 | 2.92 | 20 |
| Example 7 | 0.21 | 50.9 | 6.32 | 8.05 | 20 |
| Example 8 | 3.38 | 48.1 | 12.4 | 3.88 | 0.05 |
| Example 9 | 3.43 | 48.1 | 12.4 | 3.88 | 40 |
| Example 10 | 3.40 | 48.1 | 12.4 | 3.88 | 20 |
| Comparative Example 1 | 0 | 46.4 | 0 | - | 20 |
| Comparative Example 2 | 0.15 | 46.7 | 5.2 | 8.98 | 20 |
| Comparative Example 3 | 9.2 | 48.9 | 15.7 | 3.11 | 20 |
| Comparative Example 4 | 11.2 | 47.5 | 10.2 | 4.66 | 20 |

(3) Measurement of initial discharge capacity and initial efficiency

An initial charge capacity (mAh/g) and an initial discharge capacity (mAh/g) were measured.
A ratio of the measured initial charge capacity to the initial discharge capacity was calculated as a percentage and evaluated as the initial efficiency.

(4) Measurement of capacity retention

Charging (CC-CV 0.5 C 4.2V 0.05C CUT-OFF) and discharging (CC 0.5C 2.5V CUT-OFF) of the lithium secondary battery manufactured according to each of Examples and Comparative Examples were repeated 500 times.
A ratio of the 500th discharge capacity to the first discharge capacity was calculated as a percentage and evaluated as a capacity retention.
The evaluation results are shown in Table 2 below.

[Table 2]

| 구분 | initial discharge capacity (mAh/g) | initial efficiency (%) | capacity retention (500cyc, %) |
|---|---|---|---|
| Example 1 | 1345 | 83.1 | 93.8 |
| Example 2 | 1373 | 86.7 | 93.3 |
| Example 3 | 1313 | 89.4 | 92.9 |
| Example 4 | 1316 | 91.7 | 92.7 |
| Example 5 | 1148 | 92.0 | 92.1 |
| Example 6 | 1254 | 91.5 | 90.4 |
| Example 7 | 1321 | 82.2 | 93.9 |
| Example 8 | 1087 | 92.3 | 94.2 |
| Example 9 | 1574 | 89.0 | 87.7 |
| Example 10 | 1362 | 90.5 | 93.1 |
| Comparative Example 1 | 1437 | 72.6 | 93.9 |
| Comparative Example 2 | 1402 | 80.5 | 93.7 |

(continued)

| 구분 | initial discharge capacity (mAh/g) | initial efficiency (%) | capacity retention (500cyc, %) |
|---|---|---|---|
| Comparative Example 3 | 1353 | 83.1 | 75.5 |
| Comparative Example 4 | 1325 | 87.5 | 69.1 |

Referring to Tables 1 and 2, in Examples where the average porosity values according to Equation 1 were from 0.2% to 9.0%, initial discharge capacity, initial efficiency and capacity retention were improved compared to those from Comparative Examples.

In Examples 5 and 6 where the Si/Me ratio according to Equation 2 was less than 3, $Mg_2SiO_4$ formed by an irreversible side reaction of Si and Mg was produced in excess. Accordingly, the discharge capacity was relatively reduced compared to those from other Examples.

In Example 7 where the Si/Me ratio according to Equation 2 exceeded 8, the content of the metal element doped in the silicon-based active material particle was reduced compared to those of Examples. Accordingly, the initial efficiency was relatively lowered compared to those from other Examples.

In Example 8 where the content of the silicon-based active material particles was less than 0.1 wt% based on the total weight of the anode active material, the discharge capacity was relatively lowered compared to those from other Examples.

In Example 9 where the content of the silicon-based active material particles based on the total weight of the anode active material exceeded 35 wt%, a volume expansion ratio of the anode was increased and the capacity retention was relatively lowered compared to those from other Examples.

In Example 10 where the carbon coating layer was formed on the surface of the silicon-based active material particle, discharge capacity, initial efficiency and capacity retention were further improved.

In Comparative Examples 1 and 2, where the average of the porosity values was less than 0.2 %, the initial efficiency was explicitly reduced compared to those from Examples.

In Comparative Examples 3 and 4 where the average of the porosity values exceeded 9.0 %, deposition of a solid electrolyte interphase (SEI) layer was accelerated according to repeated charging and discharging. Accordingly, the discharge capacity and the capacity retention were reduced compared to those from Examples.

**Claims**

1.  An anode active material for a lithium secondary battery comprising a plurality of a silicon-based active material particle being doped with a metal element and including pores,

    wherein an average of porosity values defined by Equation 1 and measured for each of 10 different silicon-based active material particles among the plurality of the silicon-based active material particle is in a range from 0.2% to 9.0%:

$$[\text{Equation 1}]$$

$$\text{Porosity (\%)} = (Ap/As)*100$$

    wherein, in Equation 1, Ap is a sum of cross-sectional areas of the pores included in a 10 K resolution scanning electron microscope (SEM) image from a cross-section of the silicon-based active material particle, and As is a cross-sectional area of the silicon-based active material particle included in the 10 K resolution SEM image from the cross-section of the silicon-based active material particle.

2.  The anode active material for a lithium secondary battery according to claim 1, wherein the metal element includes at least one selected from the group consisting of Mg, Li, Al, Ca, Fe, Ti and V.

3.  The anode active material for a lithium secondary battery according to claim 1 or claim 2, wherein the metal element includes Mg.

4.  The anode active material for a lithium secondary battery according to any one of claims 1 to 3, wherein the average of the porosity values is in a range from 1.3% to 7.5%.

5. The anode active material for a lithium secondary battery according to any one of claims 1 to 4, wherein the silicon-based active material particle includes at least one selected from the group consisting of Si, SiOx (0<x≤2) and a Si-C composite.

6. The anode active material for a lithium secondary battery according to any one of claims 1 to 5, wherein a Si/Me ratio defined by Equation 2 of the silicon-based active material particle is in a range from 3 to 8:

$$[\text{Equation 2}]$$

$$\text{Si/Me ratio} = (C_{Si}/C_{Me})$$

wherein, in Equation 2, $C_{Si}$ is a content (wt%) of a silicon element contained in the silicon-based active material particle based on a total weight of the silicon-based active material particle, and $C_{Me}$ is a content (wt%) of the metal element based on the total weight of the silicon-based active material particle.

7. The anode active material for a lithium secondary battery according to claim 6, wherein $C_{Me}$ in Equation 2 is in a range from 7 wt% to 14 wt%.

8. The anode active material for a lithium secondary battery according to claim 6 or claim 7, wherein the Si/Me ratio is in a range from 4 to 7.

9. The anode active material for a lithium secondary battery according to any one of claims 1 to 8, further comprising carbon-based active material particles.

10. The anode active material for a lithium secondary battery according to claim 9, wherein the carbon-based active material particles include at least one selected from the group consisting of artificial graphite and natural graphite.

11. The anode active material for a lithium secondary battery according to claim 9 or claim 10, wherein a content of the plurality of the silicon-based active material particle based on a sum of a weight of the plurality of the silicon-based active material particle and a weight of the carbon-based active material particles is in a range from 0.1 wt% to 35 wt%.

12. The anode active material for a lithium secondary battery according to any one of claims 1 to 11, wherein each of the plurality of the silicon-based active material particle further comprises a carbon coating layer formed on at least a portion of a surface of the silicon-based active material particle.

13. A lithium secondary battery, comprising:

an anode comprising the anode active material for a lithium secondary battery of any one of claims 1 to 12; and a cathode facing the anode.

14. An electrode cell comprising

the anode comprising the anode active material of any one of claims 1 to 12;
a cathode;
and a separator interposed between the anode and the cathode.

15. An electrode assembly,
wherein the electrode assembly is formed by stacking a plurality of the electrode cells of claim 14.

# FIG. 1

# FIG. 2

# FIG. 3

# FIG. 4

# FIG. 5

# FIG. 6

Europäisches
Patentamt

European
Patent Office

Office européen
des brevets

# EUROPEAN SEARCH REPORT

Application Number

EP 23 20 9710

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2022 0091674 A (DAE JOO ELECTRONIC MAT CO LTD [KR]) 1 July 2022 (2022-07-01) | 1-3,5-15 | INV. H01M4/134 |
| Y | * claims 5,8,11,16 *<br>* paragraph [0102] *<br>* tables 2,3 *<br>* examples B6,C16 * | 4 | H01M4/1395<br>H01M4/36<br>H01M4/38<br>H01M4/02 |
| X | WO 2022/065846 A1 (DAEJOO ELECTRONIC MAT CO LTD [KR]) 31 March 2022 (2022-03-31)<br>* table 3 *<br>* example C11 *<br>* claims 10,11 * | 1-3,5-15 | |
| X | EP 3 719 881 A1 (DAE JOO ELECTRONIC MAT CO LTD [KR]) 7 October 2020 (2020-10-07) | 1-5,9, 12-15 | |
| Y | * claims 1,3,9 *<br>* table 1 *<br>* paragraph [0020] * | 4 | |
| A | WO 2020/256395 A2 (DAEJOO ELECTRONIC MAT CO LTD [KR]) 24 December 2020 (2020-12-24)<br>* table 1 *<br>* example 3 *<br>* paragraphs [0032], [0070] – [0072] * | 1-3,5-12 | |

TECHNICAL FIELDS SEARCHED (IPC)

H01M

The present search report has been drawn up for all claims

| Place of search | Date of completion of the search | Examiner |
|---|---|---|
| Munich | 22 March 2024 | Galbiati, Ivano |

EPO FORM 1503 03.82 (P04C01)

## ANNEX TO THE EUROPEAN SEARCH REPORT
## ON EUROPEAN PATENT APPLICATION NO.

EP 23 20 9710

22-03-2024

| Patent document cited in search report | | Publication date | Patent family member(s) | | Publication date |
|---|---|---|---|---|---|
| KR 20220091674 | A | 01-07-2022 | CN | 116963999 A | 27-10-2023 |
| | | | EP | 4269342 A1 | 01-11-2023 |
| | | | JP | 2024501826 A | 16-01-2024 |
| | | | KR | 20220091674 A | 01-07-2022 |
| | | | TW | 202232811 A | 16-08-2022 |
| | | | US | 2024047660 A1 | 08-02-2024 |
| | | | WO | 2022139244 A1 | 30-06-2022 |
| WO 2022065846 | A1 | 31-03-2022 | KR | 20220040580 A | 31-03-2022 |
| | | | US | 2023352665 A1 | 02-11-2023 |
| | | | WO | 2022065846 A1 | 31-03-2022 |
| EP 3719881 | A1 | 07-10-2020 | CN | 111418095 A | 14-07-2020 |
| | | | EP | 3719881 A1 | 07-10-2020 |
| | | | JP | 2021504918 A | 15-02-2021 |
| | | | KR | 20190065182 A | 11-06-2019 |
| | | | US | 2021184204 A1 | 17-06-2021 |
| WO 2020256395 | A2 | 24-12-2020 | KR | 20200144855 A | 30-12-2020 |
| | | | KR | 20210146874 A | 06-12-2021 |
| | | | WO | 2020256395 A2 | 24-12-2020 |

EPO FORM P0459